# EUROPÄISCHE PATENTSCHRIFT

(11) **EP 1 099 470 B1**
(45) Veröffentlichungstag und Bekanntmachung des Hinweises auf die Patenterteilung: **11.08.2004**
(21) Anmeldenummer: 00124691.7
(22) Anmeldetag: 11.11.2000
(51) Int. Cl.: B01F 15/00, B01F 13/00, A61C 9/00

(54) **Vorrichtung zum Vermischen zweier pastöser Massen, insbesondere zum Vermischen einer Dental-Abformmasse mit einer Katalysatormasse**
Device for mixing two pasty materials, especially for mixing a dental impression material with a catalyst material
Dispositif pour mélanger deux matières pâteuses, en particulier pour mélanger une matière pour empreinte dentaire avec une matière de calalyse

(30) Priorität: 12.11.1999 DE 19954515; 30.11.1999 DE 19957600; 09.09.2000 DE 10044762
(43) Veröffentlichungstag der Anmeldung: 16.05.2001
(73) Patentinhaber: Kettenbach GmbH & Co. KG, 35713 Eschenburg (DE)
(72) Erfinder: Bublewitz, Alexander, 35745 Herborn (DE); Suchan, Matthias, 57627 Hachenburg (DE)
(74) Vertreter: Hilleringmann, Jochen, Dipl.-Ing.

(56) Entgegenhaltungen:
- WO-A-00/21652
- DE-C- 4 235 736
- US-A- 4 432 469
- US-A- 5 249 862

## Beschreibung

Die Erfindung betrifft eine Vorrichtung zum Vermischen zweier pastöser Massen, bei denen es sich insbesondere um eine Dental-Abformmasse (Basismasse) und eine Katalysatormasse zur Initiierung und/oder Beschleunigung der Polymerisation der Dental-Abformmasse handelt.

Eine derartige Vorrichtung wird auf die Auslassstutzen einer Austragvorrichtung aufgesteckt, mittels derer durch Aufbringen von Druck auf die entweder in Kartuschen oder in Folienschlauchverpackungen befindlichen pastösen Massen diese in die Mischvorrichtung eingebracht und nach dem Vermischen in der Mischvorrichtung aus dieser als Gemisch ausgegeben werden.

In einer Vielzahl von technischen Anwendungsgebieten ist es erforderlich, zwei getrennt gelagerte pastöse Massen in vermischter Form zu applizieren. Hierbei bedient man sich entweder dynamischer oder statischer Durchlaufmischer, die während des Fließens der pastösen Massen durch ein Mischergehäuse die Massen untereinander vermischen.

Ein dynamischer Mischer ist z.B. aus EP-A-0 492 412 bekannt. Diese bekannte Vorrichtung weist ein im wesentlichen rohrförmiges Mischergehäuse mit einer darin drehbar angeordneten Mischerwelle auf. Die Mischerwelle weist eine Vielzahl von radial abstehenden stegförmigen Mischerelementen auf, die dann, wenn die Mischerwelle angetrieben wird, die beiden pastösen Massen miteinander vermischt. Die pastösen Massen gelangen über eine radiale Stirnwand am hinteren Ende des Mischergehäuses in dieses hinein. Die Stirnwand weist zu diesem Zweck zwei Einlassstutzen auf, die auf die Auslassstutzen einer Vorrichtung zum Ausbringen der pastösen Massen aufgesteckt werden. Die beiden Einlassöffnungen der Stirnwand, über die die pastösen Massen in das Mischergehäuse gelangen, liegen diametral gegenüber und sind bezogen auf die Mischerwelle axial ausgerichtet. Damit sind die beiden Stellen, an denen die pastösen Massen in das Mischergehäuse gelangen, recht weit voneinander beabstandet, was den Durchmischungsvorgang erschwert.

Aus EP-A-0 885 651 ist ein statischer Mischer bekannt, bei dem in einem Mischergehäuse mehrere Mischerelemente hintereinander und feststehend angeordnet sind. Die beiden zu vermischenden pastösen Massen gelangen über getrennte Einlassöffnungen in das Mischergehäuse hinein. Diese Öffnungen sind an diametral gegenüberliegenden Stellen des Mischergehäuses angeordnet. Die eine der beiden pastösen Massen gelangt längs eines bogenförmigen Kanals zu den Einlassöffnungen für die andere pastöse Masse, um dann gemeinsam mit dieser in den eigentlichen Mischraum zu gelangen, in dem die Mischerelemente angeordnet sind. Damit gelangen also die beiden pastösen Massen gemeinsam durch die selben Einlassöffnungen in den Mischerraum des Mischergehäuses. Hier besteht die Gefahr von Rückkontaminationen, d.h. von Kontaminationen, die sich in umgekehrter Strömungsrichtung ausbreiten, was zur Folge haben kann, dass sich zumindest für eine der beiden pastösen Massen bis in den Auslassstutzen der Austragvorrichtung hinein eine Aushärtung der pastösen Masse einstellt, was zur Folge hat, dass von dem Zeitpunkt an aus dem zugehörigen Folienschlauchbeutel bzw. der zugehörigen Kartusche kein pastöses Material mehr ausgetragen und somit die noch in der Kartusche bzw. dem Folienschlauchbeutel befindliche pastöse Masse nicht mehr verwendet werden kann.

Aus DE-C-42 35 736 ist eine Vorrichtung zum Mischen und Austragen pastöser Massen bekannt, bei der die zu vermischenden Materialien über jeweils mehrere Kanäle in einen Mischerraum eines Gehäuses einströmen.

Der Erfindung liegt die Aufgabe zu Grunde, eine Vorrichtung zum Vermischen zweier pastöser Massen zu schaffen, mit der eine möglichst homogene Durchmischung beider Massen gewährleistet ist.

Zur Lösung dieser Aufgabe wird mit der Erfindung eine Vorrichtung gemäß Anspruch 1 vorgeschlagen; vorteilhafte Weiterbildungen der Erfindung ergeben sich aus den Unteransprüchen.

Sinngemäß ist nach der Erfindung also vorgesehen, dass jede pastöse Masse über voneinander getrennte Einlassöffnungen in den das oder die Mischerelemente beinhaltenden eigentlichen Mischraum des Mischergehäuses eingebracht wird. Es findet also keine Vermischung oder Kontaktierung der pastösen Massen vor dem Passieren dieser Einlassöffnungen statt. Mindestens eine der beiden pastösen Massen gelangt ferner über mehr als eine Einlassöffnung in den Mischraum des Mischergehäuses hinein. Bei diesem Mischraum handelt es sich insbesondere um den im wesentlichen rohrförmigen Abschnitt des Mischergehäuses. Zwischen sämtlichen Einlassöffnungen befinden sich Abschottelemente. Die Verbindung der Einlassöffnungen mit den Ankopplungsöffnungen des Mischergehäuses, bei denen es sich insbesondere um Stutzen handelt, erfolgt über Kanäle, die sich von den Ankopplungsöffnungen aus bis in die Einlassöffnungen erstrecken. Mindestens einer der beiden Kanäle führt dann also von der zugehörigen Ankopplungsöffnung bis zu mehreren Eintassöffnungen. Dies kann beispielsweise dadurch erfolgen, dass sich dieser Kanal in einzelne Teilkanäle aufteilt, die strömungstechnisch gesehen parallel geschaltet sind und in den Einlassöffnungen enden. Alternativ dazu ist es aber auch möglich, dass längs der Erstreckung eines Kanals mehrere Einlassöffnungen angeordnet sind, über die der Kanal mit dem eigentlichen Mischraum des Mischergehäuses verbunden ist. In diesem Fall liegen dann also die Einlassöffnungen in Reihe.

Eine weitere Variante der Ausbildung eines zu mehr als einer Einlassöffnung führenden Kanals ist in einem Verteilerkanal zu sehen, der mit der zugehörigen Ankopplungsöffnung verbunden ist und der über die Einlassöffnungen mit dem eigentlichen Mischraum des Mischergehäuses verbunden ist.

Durch das Einbringen mindestens einer der beiden pastösen Massen an mehreren voneinander getrennten Stellen in den Mischraum wird eine verbesserte Durchmischung der beiden pastösen Massen erzielt. Der Grund ist in der Aufteilung des Massestroms dieser einen pastösen Masse auf mehrere Einlassöffnungen des rohrförmigen Abschnitts des Gehäuses bzw. des Mischerraums zu sehen. Diese verbesserte Durchmischung wird erreicht, ohne dass die beiden pastösen Massen bereits vor dem Eindringen in den Mischraum in Kontakt miteinander gebracht worden sind. Das wiederum ist vorteilhaft, wenn es darum geht, Rückkontaminationen zu verhindern.

Damit die eine pastöse Masse, die aus einer ihr zugeordneten Einlassöffnung in den Mischraum gelangt, nicht direkt zu einer der anderen pastösen Masse zugeordneten Einlassöffnung strömen kann, ist nach der Erfindung vorgesehen, dass im Mischraum zwischen benachbarten Einlassöffnungen Abschott- bzw. Prallelemente angeordnet sind, die die lichte Verbindung benachbarter Einlassöffnungen unterbrechen. Durch diese Abschott- bzw. Prallelemente ist zumindest der direkte Weg zwischen benachbarten Einlassöffnungen abgesperrt. Zwar bleiben die benachbarten Einlassöffnungen über den Mischraum strömungstechnisch in Verbindung; diese strömungstechnische Verbindung ist aber durch die Anordnung der Abschottelemente erschwert, so dass die Gefahr, dass die eine pastöse Masse innerhalb des Mischraums bis zur Einlassöffnung für die andere pastöse Masse gelangt, reduziert ist. Damit wiederum ist die Gefahr von Rückkontamination vermindert.

Die Anzahl und die relative Anordnung der Abschottelemente sollte zweckmäßigerweise gleich der Anzahl und der relativen Anordnung der Einlassöffnungen sein. Dies ist insbesondere dann von Vorteil, wenn die Abschottelemente im Falle eines dynamischen Mischers an der Mischerwelle angeordnet sind. Denn durch diese gleiche Anordnung und Anzahl von Abschottelementen und Einlassöffnungen wird erreicht, dass benachbarte Einlassöffnungen in jeder Drehstellung der Mischerwelle gegeneinander abgeschottet sind. Dies kann einerseits durch ein Versperren bzw. nahezues Versperren der Einlassöffnungen durch die Abschottelemente bei deren Bewegung oder durch die sich zwischen zwei benachbarten Einlassöffnungen befindlichen Abschottelemente erfolgen.

Die Abschottelemente überstreichen die Einlassöffnungen zumindest teilweise. Je nach Anwendung kann es vorteilhaft sein, zumindest für kurze Phasen die Einlassöffnungen vollständig zu verschließen. Grundsätzlich aber bevorzugt ist es, die Größe der Abschottelemente und/oder deren Erstreckung in Umfangsrichtung so auf die Größe der Einlassöffnungen abzustimmen, dass diese nicht gänzlich verschlossen sind, wenn sich die Abschottelemente an den Einlassöffnungen vorbeibewegen.

Neben der Funktion der Unterbindung der direkten Verbindung benachbarter Einlassöffnungen kommt den Abschottelementen im Falle eines dynamischen Mischers, also eines Mischers mit angetriebener Mischerwelle, auch die Funktion der Unterstützung des Transports der pastösen Massen in den Mischraum zu. Durch Ausbildung von schräg zu einer Radialebene der Mischerwelle verlaufenden Umlenkflächen an den Abschottelementen können diese zum Umlenken der radial in den rohrförmigen Abschnitt des Gehäuses einströmenden pastösen Massen in axiale Richtung benutzt werden. Hierbei ist es zweckmäßig, wenn jedes Abschottelement nach Art eines Keils ausgebildet ist. Im Hinblick auf ihre Umlenkfunktion werden die Abschottelemente nachfolgend auch als Abschott-/Umlenkelemente bezeichnet. Die Erstreckung der Abschott-/Umlenkelemente in Umfangsrichtung sollte so gewählt sein, dass die Abschottelemente maximal den Umfangsbereich zwischen zwei benachbarten Einlassöffnungen einnehmen können. Sind die Abschottelemente in Umfangserstreckung zu schmal ausgebildet, so könnte darunter ihre Effektivität im Hinblick auf die Unterstützung einer Umlenkung der pastösen Massen leiden.

Bei der zuvor beschriebenen Weiterbildung der erfindungsgemäßen Mischervorrichtung erfolgt die Zufuhr der zu vermischenden pastösen Massen also radial in den im wesentlichen rohrförmigen Abschnitt des Mischergehäuses hinein. Zu diesem Zweck ist der rohrförmige Abschnitt des Gehäuses mit zwei insbesondere diametral gegenüberliegenden radialen Einlassöffnungen versehen. Die pastösen Massenströme, die durch Aufbringen von Druck in den Mischer eingebracht werden, treffen innerhalb des rohrförmigen Abschnitts des Gehäuses auf die Abschott-/Umlenkelemente, die sich um die Achse der Mischerwelle herum erstreckten. Diese Abschott-/Umlenkelemente rotieren mit der sich drehenden Mischerwelle und weisen jeweils eine schräg zu einer Radialebene der Achse verlaufende Umlenkfläche auf. Mit anderen Worten handelt es sich bei den Abschott-/Umlenkelementen um im wesentlichen sägezahnförmige Keile, die gebogen um die Achse der Mischerwelle herum verlaufen. Diese Abschott-/Umlenkelemente fungieren wie eine Förderschnecke bei einer Schneckenpumpe und sorgen dafür, dass das anstehende pastöse Material direkt in axialer Richtung von den Einlassöffnungen in Richtung der Auslassöffnung abgefördert wird. Damit werden Rückkontaminationen zuverlässig verhindert, da nämlich stets das mindestens eine Abschott-/Umlenkelement den axialen Transport der durch die Einlassöffnungen in den rohrförmigen Abschnitt des Mischergehäuses gelangenden pastösen Massen unterstützt.

Wie bereits zuvor dargelegt, können die Abschott-/Umlenkelemente jeweils eine Keilform aufweisen. Alternativ zu dieser Keilform bietet es sich an, die Abschott-/Umlenkelemente als einen schraubenlinienförmig sich um die Achse herum verlaufenden Steg auszubilden; in diesem Ausführungsbeispiel weisen die Abschott-/Umlenkelement also die Form eines Gewindes auf. Derartige umlaufende Stege sind von Schneckenpumpen und Förderschnecken her bekannt.

Vorteilhafterweise ist die Mischerwelle in Höhe der Einlassöffnungen des rohrförmigen Abschnitts des Mischergehäuses mit mindestens einem Abstreifersteg versehen, der axial von der Achse der Mischerwelle beabstandet ist und parallel zu dieser verläuft. Dieser Abstreifersteg weist also einen Zwischenraum zur Achse der Mischerwelle auf und erstreckt sich parallel zu dieser. Versuche haben überraschender Weise ergeben, dass ein solcher Abstreifersteg und insbesondere zwei diametral gegenüberliegend angeordnete derartige Abstreiferstege die Durchmischung der beiden Massenströme verbessert. Insbesondere hat sich eine Variante als vorteilhaft herausgestellt, bei der zwischen benachbarten Abschott-/Umlenkelementen jeweils ein Abstreifersteg vorgesehen ist.

Um dem erfindungsgemäßen dynamischen Mischer eine möglichst einfache Konstruktion verleihen zu können, weist das Gehäuse an seinem hinteren Ende ein quer zur Achse gerichtetes Einsatzteil auf, von dem zwei Einlassstutzen abstehen. Das Einsatzteil befindet sich in einem konisch aufgeweiteten, sich an den rohrförmigen Abschnitt anschließenden Gehäuseabschnitt des Mischers und weist die Kanäle auf, die sich von den Einlassstutzen aus erstrecken. Diese beiden Kanäle verlaufen unter Abwinklung radial in eine mittige zylindrische Aufnahmevertiefung auf der Innenseite des Einsatzteils, von der die Achse der Mischerwelle mit den Abschott-/Umlenkelementen aufgenommen ist. Somit bildet also die zylindrische Aufnahmevertiefung des Einsatzteils einen Teilbereich des rohrförmigen Gehäuseabschnitts des Mischers. Die beiden Einlassstutzen des Einsatzteils bilden die Ankopplungsöffnungen und werden auf die Auslassstutzen der Austrag- bzw. Auspressvorrichtung aufgesteckt. Ebenso ist es möglich, dass die Auslassstutzen auf die Einlassstutzen aufgesteckt werden. Ausgehend von den Einlassstutzen erstrecken sich dann die beiden Kanäle zu den mehr als drei Einlassöffnungen.

Die Abschott-/Umlenkelemente sorgen dafür, dass jeweils die benachbarten Einlassöffnungen innerhalb der von ihnen aufgespannten Ebene bzw. innerhalb der Vertiefung nicht unmittelbar in Fluidverbindung stehen. Vielmehr befindet sich in jeder Drehstellung der Mischerwelle eines der Abschott-/Umlenkelemente zumindest teilweise im Bereich zwischen zwei benachbarten Einlassöffnungen bzw. verschließen die Einlassöffnungen im wesentlichen. Dies wird dadurch erreicht, dass die Anzahl und die Relativanordnung der Abschott/Umlenkelemente gleich der Anzahl und der Relativanordnung der Einlassöffnungen ist. Alternativ kann pro Einlassöffnung auch mehr als ein Abschott-/Umlenkelement vorgesehen sein. Die Anzahl von Einlassöffnungen ist also gleich der Anzahl der Gruppe von Abschott-/Umlenkelementen, wobei jede Gruppe mindestens ein Abschott-/Umlenkelement aufweist. Die Anordnung der Gruppe untereinander ist dabei gleich der Anordnung der Einlassöffnungen untereinander. Die Einlassöffnungen und die Abschott-/Umlenkelemente bzw. die Gruppen von Abschott-/Umlenkelementen sind dabei gleichmäßig verteilt über 360° angeordnet. Bei drei Einlassöffnungen sind diese also um 120° gegeneinander versetzt angeordnet. Demzufolge sind auch die drei Abschott-/Umlenkelemente oder, genauer gesagt, die drei Gruppen von Abschott-/Umlenkelementen um jeweils 120° zueinander versetzt.

Innerhalb der Gruppen können die Abschott-/Umlenkelemente gleichförmig oder mit unterschiedlichen gegenseitigen Abständen angeordnet sein. Jedes Abschott-/Umlenkelement bzw. jede Gruppe von Abschott-/Umlenkelementen erstreckt sich ferner vorzugsweise über mehr als die Umfangserstreckung der größten der Einlassöffnungen. Durch all die zuvor beschriebenen Maßnahmen wird erreicht, dass in jeder Drehstellung der Mischerwelle zumindest ein Abschott-/Umlenkelement den "lichten" Weg zwischen zwei benachbarten Einlassöffnungen "blockiert". Dies ist im Hinblick auf die Verhinderung einer Rückkontamination von Vorteil. Daneben wird die Gefahr solcher Rückkontaminationen auch durch den unmittelbaren Abtransport der durch die Einlassöffnungen radial eintretenden Massen unter Umlenkung ihrer Massenströme in Richtung auf die den Abschott-/Umlenkelementen nachgeschalteten Mischerelemente verringert.

Durch die in unterschiedlichen axialen Abschnitten der Mischerwelle angeordneten Abschott-/Umlenkelemente und Mischerelemente wird eine funktionale Trennung des die Mischerwelle aufnehmenden zylindrischen Gehäuseabschnitts in einen in Strömungsrichtung ersten Abschott-/Umlenkabschnitt mit gegenseitiger Abschattung der Einlassöffnungen zur Unterbindung einer Vermischung der Massen zwecks Verhinderung einer Rückkontamination und einen in Strömungsrichtung hinter dem Abschott-/Umlenkabschnitt angeordneten Mischabschnitt zum Vermischen der Massen erzielt.

Das Konzept des Einbringens zumindest einer der beiden Massen an mehreren räumlich voneinander getrennten Stellen des Mischraumes mit zwischen diesen angeordneten Abschottelementen lässt sich sowohl bei einem statischen als auch bei einem dynamischen Mischer, also bei einem Mischer mit feststehenden Mischerelementen und einem Mischer mit drehenden Mischerelementen einsetzen.

In vorteilhafter Weiterbildung der Erfindung ist ferner vorgesehen, dass einer der beiden Kanäle sich bis zu einer einzigen Einlassöffnung und der andere Kanal sich bis zu zwei Einlassöffnungen erstreckt. Damit weist der Mischraum insgesamt drei Einlassöffnungen auf. Diese Einlassöffnungen sind zweckmäßigerweise gleichmäßig verteilt angeordnet. Diese gleichmäßige Verteilung kann entweder in Umfangsrichtung oder in Axialerstreckung des Mischraums vorgesehen sein. Auch wenn mehr als drei Einlassöffnungen vorgesehen sind, und zwar unabhängig davon, wie sich diese Einlassöffnungen zahlenmäßig auf die beiden Kanäle verteilen, gilt, dass es besonders vorteilhaft ist, wenn sämtliche Einlassöffnungen räumlich gleichmäßig verteilt angeordnet sind.

Die Ausrichtung der Einlassöffnungen relativ zum eigentlichen Mischraum, das heißt dem im wesentlichen rohrförmigen Abschnitt des Gehäuses, kann entweder im wesentlichen radial und/oder im wesentlichen axial sein. Ferner ist es möglich, dass sowohl radiale als auch axiale Einlassöffnungen vorgesehen sind.

In vorteilhafter Weiterbildung der Erfindung befinden sich innerhalb des rohrförmigen Gehäuseabschnitts zwischen den Einlassöffnungen und der axialen Auslassöffnung mehrere Mischerelemente, die nach Art von radialen Stegen von der Achse abstehen und bis nahe der Innenfläche des rohrförmigen Gehäuseabschnitts reichen. Diese Mischerelemente sind innerhalb mehrerer Radialebenen von der Welle abstehend angeordnet und führen zu einer Umlenkung der sich axial durch das Gehäuse hindurch erstreckenden Massenströme. Hierdurch kommt es zur gewünschten Vermischung. Der Vermischungseffekt verstärkt sich noch, wenn diese Mischerelemente, die aufgrund ihrer radialen Ausrichtung den direkten Strom zwischen den Einlassöffnungen und der Auslassöffnung verhindern, sich über einen größeren Winkelbereich, beispielsweise 90° erstrecken. Dies kann dadurch realisiert werden, dass benachbarte Mischerelemente durch einen umlaufenden Teilabschnitt miteinander verbunden sind. Auf diese Weise entstehen also nach Art von Viertelkreisen ausgebildete Mischerelemente, wobei es günstig sein kann, wenn diese Viertelkreise in ihren in Umfangsrichtung betrachtet mittleren Abschnitten weiter von der Innenfläche des rohrförmigen Abschnitts des Gehäuses abstehen als an ihren Enden. Zweckmäßig ist es, wenn von Radialebene zu Radialebene in Umfangsrichtung versetzt jeweils zwei benachbarte radial verlaufende Mischerelemente untereinander in der oben beschriebenen Weise verbunden sind.

Zusätzlich zu den zuvor beschriebenen starren Mischerelementen ist es für den Durchmischungsvorgang von Vorteil, wenn die Mischerwelle zusätzliche flexible Abstreiferelemente aufweist, die aufgrund ihrer Flexibilität bzw. aufgrund zumindest ihrer flexibel ausgebildeten von der Achse beabstandeten freien Enden an der Innenwand des rohrförmigen Gehäuses entlangstreichen. Alternativ können die Abstreiferelemente auch starr ausgebildet sein und tangential von der Achse der Mischerwelle abstehen. Den zwei unterschiedlichen Radialebenen der Mischerwelle sind dann jeweils zwei sozusagen diametral gegenüberliegend angeordnete starre Abstreiferelemente angeordnet. Schließlich ist es auch möglich, flexible und starre Abstreiferelemente gemeinsam an der Mischerwelle vorzusehen.

Bei einer weiteren vorteilhaften Ausgestaltung der Erfindung ist vorgesehen, dass die Mischerelemente der in axialer Richtung zu den Einlassöffnungen des rohrförmigen Abschnitts des Gehäuses benachbarten ersten Radialebenen kürzer sind als die Mischerelemente in den übrigen zweiten Radialebenen. Damit ist der Abstand zwischen den radial außenliegenden Enden der Mischerelemente zum rohrförmigen Gehäuseabschnitt innerhalb der ersten Radialebenen größer als innerhalb der zweiten Radialebenen. Dies führt zu einem größeren Mischerraum im Bereich des rohrförmigen Gehäuseabschnitts, der sich an die Einlassöffnungen anschließt. Dieser größere Mischerraum hat den Vorteil, dass durch die Auspress- bzw. Austragvorrichtung bedingte Dosierungstoleranzen besser kompensiert werden. Durch die zusätzliche Anordnung der tangential abstehenden Abstreiferelemente innerhalb diesen vergrößerten Mischraumes hat die jeweils vorlaufende Materialkomponente eine längere Verweilzeit im Mischraum, wodurch mehr Zeit gegeben ist, um die langsamere Materialkomponente zu der vorlaufenden Materialkomponente zu mischen.

Ein größerer Mischraum in dem zuvor beschriebenen Bereich wird jedoch vorteilhafterweise dadurch realisiert, dass die Achse der Mischerwelle im Durchmesser kleiner ist als im übrigen Bereich und die Mischerelemente sich radial genauso weit erstrecken wie sämtliche anderen Mischerelemente, nämlich bis unmittelbar zur Innenseite des rohrförmigen Gehäuseabschnitts.

Nachfolgend wird anhand der Figuren ein Ausführungsbeispiel der Erfindung näher erläutert. Im einzelnen zeigen:
- Fig. 1: eine Gesamtseitenansicht einer Austragvorrichtung für vermischte pastöse Komponenten,
- Fig. 2: einen Längsschnitt durch den dynamischen Mischer, wie er bei der Austragvorrichtung gemäß Fig. 1 eingesetzt wird,
- Fign. 3 bis 6: Querschnittsansichten durch den Mischer gemäß Fig. 2 entlang der dort angegebenen Linien III-III, IV-IV, V-V und VI-VI und
- Fig. 7: eine Querschnittsansicht ähnlich der gemäß Fig. 6, jedoch bei einer alternativen Ausgestaltung der Mischerwelle.

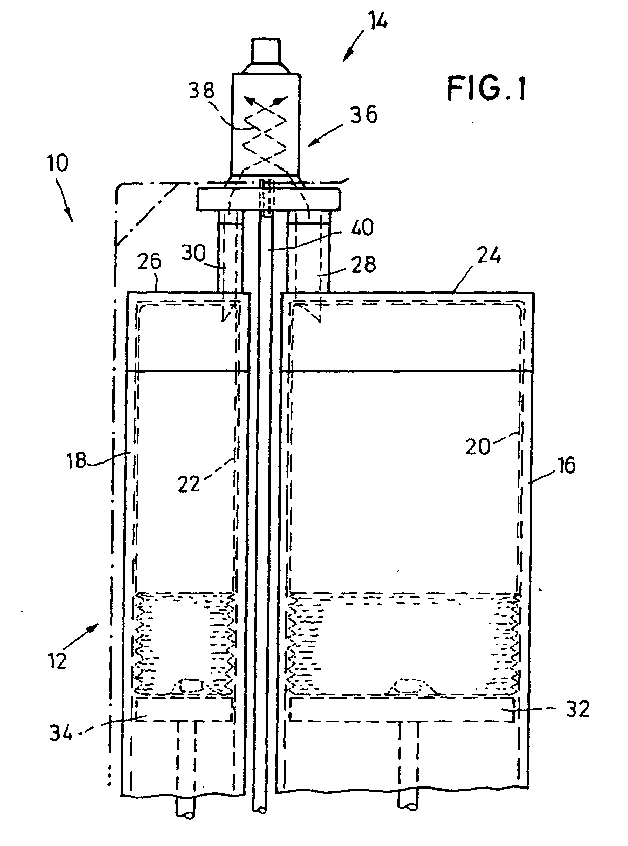

In Fig. 1 ist eine Austragvorrichtung 10 für zwei miteinander zu vermischende pastöse Komponenten in Seitenansicht dargestellt. Die Vorrichtung 10 umfasst einen Auspressteil 12 und einen Mischerteil 14, wobei der Auspressteil 12 zwei Druckbehälter 16,18 zur Aufnahme zweier die pastösen Massen beinhaltenden Schlauchbeutel 20,22 aufweist. An den vorderen stirnseitigen Enden 24,26 der Druckbehälter 16,18 weisen diese Ausgabeöffnungen definierende Auslassstutzen 28,30 auf, über die bei Ausübung eines Drucks auf das hintere Ende der Schlauchbeutel 20,22 deren Inhalt ausgebracht wird. Die Druckbeaufschlagung der Schlauchbeutel 20,22 erfolgt mittels Druckstempeln 32,34, die motorisch angetrieben sind, was hier nicht näher dargestellt ist.

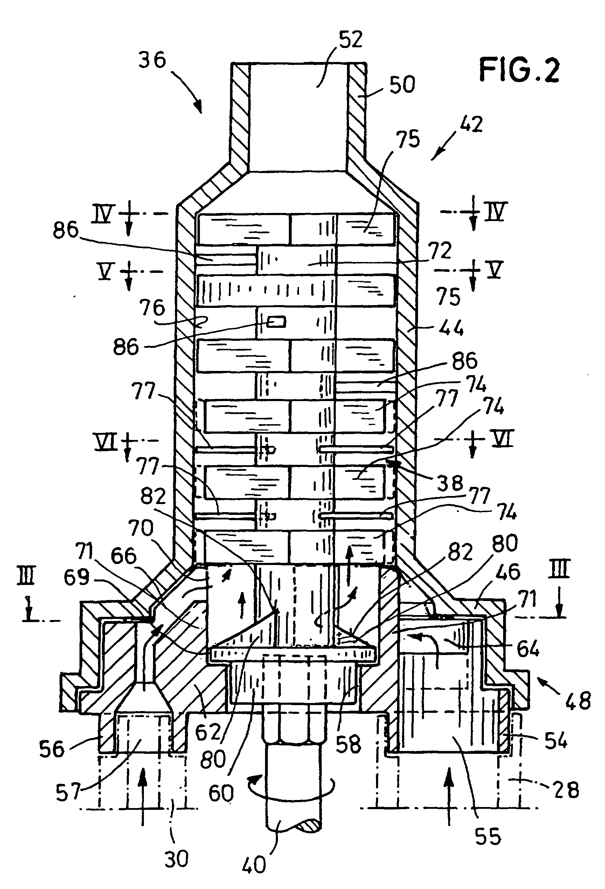

Auf die Auslassstutzen 28,30 ist ein dynamischer Mischer 36 aufgesteckt, der anhand der Fign. 2 bis 7 weiter unten genauer beschrieben werden wird. Ganz allgemein lässt sich zu diesem dynamischen Mischer 36 sagen, dass seine Mischerwelle 38 motorisch angetrieben ist. Zu diesem Zweck ist die Mischerwelle 38 mit einer Antriebsstange 40 kuppelbar, die von einem ebenfalls nicht dargestellten Motor drehend angetrieben wird.

Die Einzelheiten des dynamischen Mischers 36 werden insbesondere anhand von Fig. 2 deutlich. In dieser Figur ist ein Längsschnitt durch den Mischer 36 dargestellt. Der Mischer 36 weist ein Gehäuse 42 auf, das einen im wesentlichen zylindrischen bzw. rohrförmigen Abschnitt 44 mit einem konisch aufgeweiteten Ankopplungsabschnitt 46 an dem dem Auspressteil 12 zugewandten hinteren Ende 48 und ein verjüngtes vorderes Ende 50 aufweist. Das verjüngte Ende 50 ist als Auslassstutzen ausgebildet und definiert die Auslassöffnung 52 für das Materialgemisch, während am hinteren Ende 48 des Gehäuses 42 zwei Einlassstutzen 54,56 angeordnet sind, die Ankopplungsöffnungen 55 und 57 bilden und auf die Auslassstutzen 28,30 des Auspressteils 12 aufsteckbar sind. Zwischen den beiden Einlassstutzen 54 befindet sich eine Durchbrechung 58, in der das eine Ende 60 der Mischerwelle 38 drehbar gelagert ist. Über diese Durchbrechung ist die Antriebsstange 40 mit der Mischerwelle 38 kuppelbar.

Die Einlassstutzen 54,56 und die Durchbrechung 58 sind in einem Einsatzteil 62 ausgebildet, das am hinteren Ende 48 des Gehäuses 42 in dessen konischen Ankopplungsabschnitt 46 eingesteckt ist. Ausgehend von den Einlassstutzen 54,56 erstrecken sich durch das Einsatzteil 62 zwei Kanäle 64,66, die unter Umlenkung in radialen Öffnungen 68,70 münden. Diese Einlassöffnungen 68,70 sind bezogen auf den zylindrischen Abschnitt 44 des Mischergehäuses 42 radial angeordnet. Über die Kanäle 64,66 werden die beiden pastösen Komponenten in den dynamischen Mischer 36 hinein transportiert, wo sie dann in radialer Richtung auf die Mischerwelle 38 auftreffen.

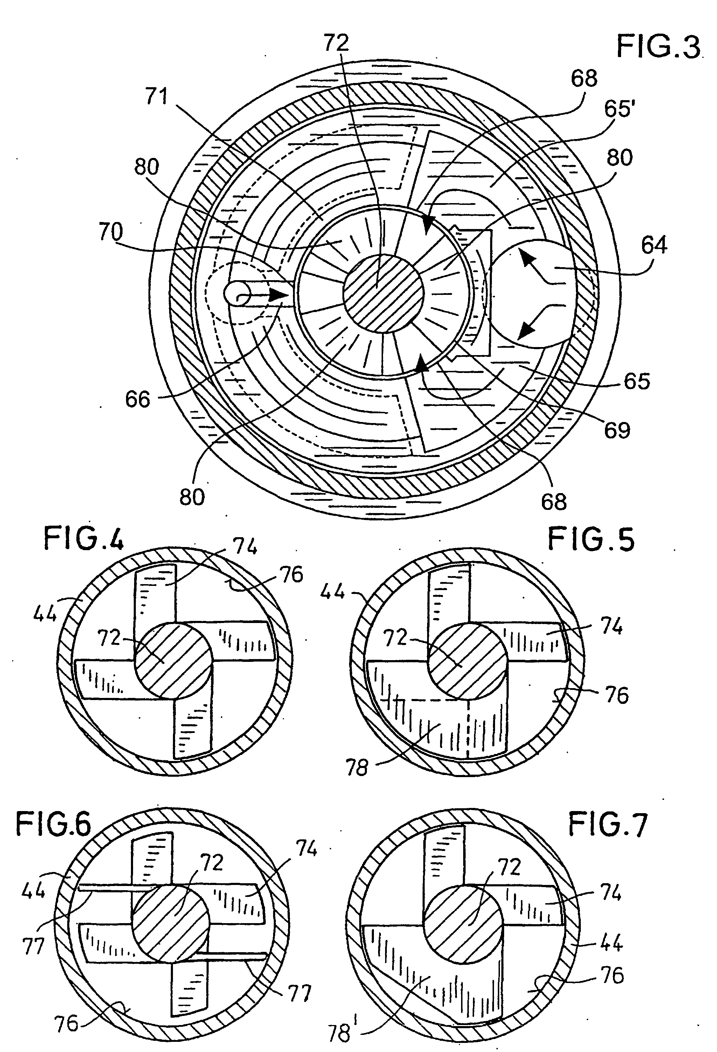

Wie anhand von Fign. 2 und 3 zu erkennen ist, weist das Einsatzteil 62 eine zentrale im wesentlichen zylindrische Aufnahmevertiefung 69 auf, die konzentrisch zur Durchbrechung 58 angeordnet ist und in die die Mischerwelle 38 eingesetzt ist. In der zylindrischen Wandung 71 der Aufnahmevertiefung 69 sind die Einlassöffnungen 68,70 eingebracht. Ferner sind in diesem Bereich auch die Kanäle 64,66 ausgebildet. Diese Kanäle 64,66 sind als oben offene Nuten oder Aussparungen ausgebildet, die zusammen mit dem im wesentlichen konisch aufgeweiteten Ankopplungsabschnitt 46 die allseits geschlossenen Kanäle bilden.

Wie insbesondere anhand von Fig. 3 zu erkennen ist, ist der Kanal 64 in zwei Teilkanäle 65,65' aufgeteilt. Diese Teilkanäle 65,65' erstrecken sich von der Ankopplungsöffnung 55 in Umfangsrichtung um die zylindrische Wandung 71 herum um etwa 60° in entgegengesetzten Umfangsrichtungen und enden in getrennten Einlassöffnungen 68, die um etwa 120° versetzt angeordnet sind. Durch die Teilkanäle 65,65' gelangt die pastöse Masse mit dem größeren Durchsatz in den Mischraum. Hierbei handelt es sich um die Basis-Abformmasse, deren Anteil je nach chemischer Zusammensetzung etwa 5 mal so groß ist wie die Menge an Katalysatormasse, die über den Kanal 66 und über die Einlassöffnung 70 in den Mischraum gelangt. Die Einbringung der großvolumigeren Masse in den Mischraum an unterschiedlichen Stellen längs des Umfangs des Mischraums verbessert deren Vermischung mit der anderen Masse, deren Volumenanteil geringer ist.

Die erfindungsgemäße Ausbildung des Mischers dergestalt, dass von einer oder beiden Ankopplungsöffnungen 55,57 aus sich mehrere Kanäle erstrecken, die in mehreren Einlassöffnungen 68,70 enden, welche insbesondere gleichmäßig verteilt in den die Mischerwelle 38 aufweisenden Abschnitt des Mischergehäuses 42 einmünden, hat neben einem verbesserten Strömungsverhalten der pastösen Massen vor allem auch den Vorteil, dass die in den Mischraum eingelassenen Materialien besser und homogener vermischt werden können. Hierzu trägt die räumlich verteilte Einbringung jeder der beiden Massen bzw. zumindest einer der beiden Massen bei. Denn diese verteilte Einbringung beider Massen bzw. zumindest einer der beiden Massen in den Mischraum hat den Vorteil, dass dabei bereits eine Art Vorvermischung durch die Aufteilung der Massenströme auf mehrere Einlassöffnungen erfolgt.

Die einzelnen Teilkanäle können gleiche oder unterschiedliche Länge aufweisen. Sie können in Form eines von der betreffenden Ankopplungsöffnung 55,57 ausgehenden Sammelkanals ausgebildet sein, von dem mehrere Abzweigkanäle abzweigen, die in den Einlassöffnungen 68,70 enden.

Die Mischerwelle 38 weist eine drehbar gelagerte Achse 72 auf, von der in einer Vielzahl von Radialebenen jeweils vier stegförmige Mischerelemente 74,75 im wesentlichen radial abstehen. Die genaue Anordnung dieser Mischerelemente 74,75 ergibt sich aus der Schnittdarstellung gemäß Fig. 4. Zu erkennen ist, dass die einen sich im wesentlichen radial erstreckenden Begrenzungsseitenkanten der Mischerelemente 74,75 im wesentlichen tangential zur Umfangsfläche der Achse 72 verlaufen. Zu erkennen ist ferner, dass die in Strömungsrichtung betrachtet ersten Mischerelemente 74 kürzer sind als die der Auslassöffnung 52 zugewandt angeordneten Mischerelemente 75. Mit anderen Worten ist also der radiale Abstand der Mischerelemente 74 zur Innenfläche 76 des rohförmigen Gehäuseabschnitts 42 größer als im Falle der Mischerelemente 75. Damit ergibt sich in Strömungsrichtung der Massen betrachtet auf die Einlassöffnungen 68,70 folgend ein Mischraumabschnitt innerhalb des rohrförmigen Gehäuseabschnitts 44, der größer ist als der Mischraumabschnitt, in dem die längeren Mischerelemente 75 angeordnet sind. Zwischen benachbarten Radialebenen von Mischerelementen 74 sind überdies tangential abstehende Abstreiferelemente 77 angeordnet, die zu einer Verbesserung der Durchmischung beitragen. Der volumenmäßig größere erste Abschnitt des Mischerraums sorgt darüber hinaus für eine größere Verweildauer der gegebenenfalls auch im Mischerraum noch voreilenden einen Masse, so dass für die langsamer strömende andere Masse genügend Zeit verbleibt, um sich mit der erstgenannten Masse homogen zu vermischen.

In Fig. 2 gestrichelt ist eine Variante des Mischers angedeutet, bei der die Achse 72 im Bereich der ersten Radialebenen dünner ist als innerhalb der übrigen Radialebenen. Die Mischerelemente 74,75 weisen dabei sämtlich die gleiche Erstreckung auf, nämlich bis unmittelbar nahe an den rohrförmigen Gehäuseabschnitt 44.

Wie sich aus Fig. 4 ergibt, sind also pro Radialebene vier Mischerelemente 74 vorgesehen, die gemäß Fig. 2 bis nahe an die Innenfläche 76 des zylindrischen Gehäuseabschnitts 44 reichen. Der gesamte Bereich zwischen den Einlassöffnungen 68,70 und dem Ende der Mischerwelle 38, die sich bis zum sich verjüngenden Ende 50 des Mischergehäuses 42 erstreckt, ist mit diesen Mischerelemente 74 versehen. Zusätzlich weist die Mischerwelle 38 nach Art von Viertelkreisflächen ausgebildete Mischerelemente 78 auf, die durch Verbinden jeweils zweier benachbarter Mischerelemente 74 in einer Radialebene gebildet sind (siehe beispielsweise die Schnittdarstellung gemäß Fig. 5). In dieser Ausgestaltung ist die radial außenliegende Begrenzungskante des Mischerelemente 78 kreisbogenförmig ausgebildet, während sie bei der Alternative gemäß Fig. 7 sekantiell verläuft. Das Mischerelement 78' gemäß Fig. 7 weist also in einem mittleren Umfangsabschnitt einen größeren Abstand zur Innenfläche 76 des zylindrischen Gehäuseabschnitts 44 auf.

Während die Mischerelemente 74,78,78' aufgrund ihrer radialen Erstreckung bis nahe an den zylindrischen Gehäuseabschnitt 44 bei Rotation der Mischerwelle 38 für eine Umlenkung und damit Verwirbelung der an sich axial strömenden pastösen Massen sorgen, weist die Mischerwelle 38 im Bereich der radialen Einlassöffnungen 68,70 drei Abschott-/Umlenkelemente 80 auf, die nach Art einer Förderschnecke ausgebildet sind. Die Abschott-/Umlenkelemente 80 sind als sägezahnförmige Keile ausgebildet, die sich jeweils über etwa 60° um die Achse 72 der Mischerwelle 38 herum erstrecken. Die Abschott-/Umlenkelemente 80 weisen eine in Umfangsrichtung ansteigende Umlenkfläche 82 auf, die in Richtung zur Auslassöffnung 52 des dynamischen Mischers 36 weist und winklig zu einer radial zur Achse 72 verlaufenden Ebene verlaufen. Diese Abschott-/Umlenkelemente 80 verlaufen also abschnittsweise schraubenlinienförmig und sorgen für eine axiale Bewegungskomponente der pastösen Massenströme. Damit unterstützen die Abschott-/ Umlenkelemente 80 den Abtransport von pastöser Masse, die aus den Einlassöffnungen 68,70 in den zylindrischen Gehäuseabschnitt 44 eindringt. Dieses unterstützende und damit verstärkende Abführen der pastösen Massen in axialer Richtung verringert die Gefahr der Kontamination der beiden pastösen Massen, d.h. die ungewollte Vermischung bzw. Rückkontamination der beiden pastösen Massen über die Einlassöffnungen 68,70 in die Kanäle 64,66 hinein und gegebenenfalls weiter bis in die Auslassstutzen 28,30. Denn wenn es in diesen Bereichen zu einer Kontamination und damit zu einer Polymerisation kommt, lässt sich aufgrund der Verstopfung der Auslassstutzen 28,30 das gegebenenfalls noch in den Schlauchbeuteln 20,22 befindliche Restmaterial nicht mehr austragen. Durch die regelmäßige Anordnung der Abschott-/Umlenkelemente 80 und der Einlassöffnungen 68,70 ist aber auch bei freiliegenden Einlassöffnungen durch die Abschott-/Umlenkelemente 80 die direkte Verbindung benachbarter Einlassöffnungen 68,70 zu jedem Zeitpunkt unterbunden (siehe Fig. 3). Auch dieser Abschottungseffekt der Abschott-/Umlenkelemente 80 trägt wesentlich zur Reduzierung der Rückkontaminationsgefahr bei, da nunmehr die z. B. aus der Einlassöffnung 70 gelangende Katalysatormasse nicht mehr direkt zu einer der Einlassöffnungen 68 für die Basis-Abformmasse und umgekehrt gelangen kann.

Zusätzlich zu den Abschott-/Umlenkelementen 80 kann die Mischerwelle 38 noch Abstreiferstege aufweisen, die von der Achse 72 der Mischerwelle 38 radial beabstandet sind und parallel zur Achse 72 verlaufen. Die Abstreiferstege bewegen sich bei Rotation der Mischerwelle 38 mit geringem Abstand innen entlang der zylindrischen Wandung 71 des Einsatzteils 62 und tragen zu einer insgesamt homogeneren Durchmischung der beiden Massentröme bei.

Anhand von Fig. 6 soll noch auf ein weiteres Merkmal des dynamischen Mischers 36 eingegangen werden. Bei den zuvor erwähnten Mischerelementen 74 handelt es sich um starre im wesentlichen radial abstehende Stege, die aufgrund der Rotation der Achse 72 zu einer Verwirbelung der Massenströme führen. Zusätzlich zu den starren Mischerelementen 74,75 und den Abstreiferelementen 77 kann der dynamische Mischer 36 nach Art von dünnen flexiblen Stegen ausgebildete weitere Mischerelemente 86 aufweisen, die von innen an der Innenseite 76 des zylindrischen Gehäuseabschnitts 44 entlangstreichen. Auch diese zusätzlichen flexiblen Mischerelemente 86 sorgen für eine Verwirbelung der Massenströme. Von den flexiblen Mischerelementen 86 existieren in mehreren aufeinanderfolgenden Radialebenen der Mischerwelle 38 jeweils eines pro Ebene, wobei diese Mischerelemente 86 um einen konstanten Winkelbereich von Radialebene zu Radialebene versetzt angeordnet sind. Selbiges gilt für die Mischerelemente 78 bzw. 78', die jeweils zwei benachbarte Mischerelemente 74,75 miteinander verbinden und ebenfalls um in diesem Fall 90° versetzt von Radialebene zu Radialebene angeordnet sind. Die Mischerelemente 86 und die Mischerelemente 78 bzw. 78' sind also längs einer Schraubenlinie um die Achse 72 herum gleichmäßig verteilt angeordnet. Beide Mischerelementtypen eigenen sich vorzüglich für eine homogene Durchmischung der pastösen Massen in dem auch als Durchlaufmischer zu bezeichnenden dynamischen Mischer 36.

## Patentansprüche

1. Vorrichtung zum Vermischen zweier pastöser Massen, insbesondere einer Dental-Abformmasse mit einer Katalysatormasse, mit
- einem Gehäuse (42), das einen im wesentlichen rohrförmigen Abschnitt (44) und mindestens zwei Einlassöffnungen (68,70) für die beiden pastösen Massen an seinem hinteren Ende und eine Auslassöffnung (52) für die vermischten pastösen Massen an seinem vorderen Ende aufweist, wobei
- das Gehäuse (42) einen sich an den rohrförmigen Abschnitt (44) anschließenden Ankopplungsabschnitt (46) mit zwei Ankopplungsöffnungen (55,57) zum Verbinden des Gehäuses (42) mit zwei Ausgabeöffnungen (28,30) einer Vorrichtung (12) zum Ausgeben der beiden pastösen Massen aufweist und
- die Ankopplungsöffnungen (55,57) über einen ersten und einen zweiten Kanal (64,66), die sich durch den Ankopplungsabschnitt (46) hindurch erstrecken, mit den Einlassöffnungen (68,70) verbunden sind, und
- mindestens einem innerhalb des rohrförmigen Abschnitts (44) des Gehäuses (42) angeordneten Mischerelement (74,75) zum Vermischen der beiden pastösen Massen, wenn diese den rohrförmigen Abschnitt (44) des Gehäuses (42) passieren, wobei
- sich der erste oder der zweite Kanal (64,66) oder beide Kanäle (64,66) bis zu jeweils mindestens zwei Einlassöffnungen (68,70) erstreckt bzw. erstrecken,
- sämtliche Einlassöffnungen (68,70) räumlich voneinander getrennt sind und
- der erste Kanal (64) oder die ersten Kanäle (64) getrennt von dem zweiten Kanal (66) oder den zweiten Kanälen (66) ist bzw. sind,
**dadurch gekennzeichnet ,**
- **dass** zwischen sämtlichen Einlassöffnungen (68,70) innerhalb des Gehäuses (42) Abschottelemente (80) zur Unterbrechung der lichten Verbindung benachbarter Einlassöffnungen (68,70) angeordnet sind.

2. Vorrichtung nach Anspruch 1, **dadurch gekennzeichnet, dass** die Abschottelemente (80) und das mindestens eine Mischerelement (74,75) unbeweglich in dem Gehäuse (42) angeordnet sind.

3. Vorrichtung nach Anspruch 1, **dadurch gekennzeichnet, dass** das mindestens eine Mischerelement (74,75) radial von einer Mischerwelle (38) absteht, die sich durch den rohrförmigen Abschnitt (44) des Gehäuses (42) erstreckt und in diesem drehbar gelagert ist, und dass die Abschottelemente (80) in Höhe der Einlassöffnungen (68,70) radial von der Mischerwelle (38) abstehen und bei Rotation der Mischerwelle (38) die Einlassöffnungen (68,70) zumindest teilweise überstreichen.

4. Vorrichtung nach Anspruch 3, **dadurch gekennzeichnet, dass** jedes Abschottelement (80) eine sich um die Mischerwelle (38) erstreckende und schräg zu einer Radialebene der Mischerwelle (38) verlaufende Umlenkfläche (82) zum Umlenken der radial in den rohrförmigen Abschnitt (44) des Gehäuses (42) eingebrachten pastösen Massen in axiale Richtung zur Auslassöffnung (52) des Gehäuses (42) hin aufweist.

5. Vorrichtung nach Anspruch 4, **dadurch gekennzeichnet, dass** jedes Abschottelement (80) nach Art eines Keils ausgebildet ist.

6. Vorrichtung nach einem der Ansprüche 3 bis 5, **dadurch gekennzeichnet, dass** die Umfangserstreckung der Abschottelemente (80) gleich der Umfangserstreckung der Einlassöffnungen (68,70) ist.

7. Vorrichtung nach einem der Ansprüche 1 bis 6, **dadurch gekennzeichnet, dass** sich ein bis zu mehr als einer Einlassöffnung (68,70) erstreckender Kanal (64,66) auf eine der Anzahl dieser Einlassöffnungen (68,70) gleichende Anzahl von Teilkanälen (65,65') aufteilt, an deren Enden sich die Einlassöffnungen (68,70) befinden.

8. Vorrichtung nach einem der Ansprüche 1 bis 7, **dadurch gekennzeichnet, dass** ein Kanal (64,66), der sich bis zu mehr als einer Einlassöffnung (68,70) erstreckt, längs seiner Erstreckung über diese Einlassöffnungen (68,70) mit dem rohrförmigen Abschnitt (44) des Gehäuses (42) verbunden ist.

9. Vorrichtung nach einem der Ansprüche 1 bis 8, **dadurch gekennzeichnet, dass** sich der eine Kanal (64) bis zu einer Einlassöffnung (68) und der andere Kanal (66) bis zu zwei Einlassöffnungen (70) erstreckt, und dass diese drei Einlassöffnungen (68,70) gleichmäßig in Umfangsrichtung des rohrförmigen Abschnitts (44) des Gehäuses (42) angeordnet sind.

10. Vorrichtung nach einem der Ansprüche 1 bis 9, **dadurch gekennzeichnet, dass** die Einlassöffnungen im wesentlichen radial und/oder im wesentlichen axial zum rohrförmigen Abschnitt (44) des Gehäuses (42) ausgerichtet sind.

11. Vorrichtung nach einem der Ansprüche 1 bis 10, **dadurch gekennzeichnet, dass** das mindestens eine Mischerelement (74,75) unbeweglich in dem rohrförmigen Abschnitt (44) des Gehäuses (42) angeordnet ist oder dass die Mischerelemente (74,75) von einer Mischerwelle (38) abstehen, die zwecks drehenden Antriebs drehbar in dem rohrförmigen Abschnitt (44) des Gehäuses (42) gelagert ist.

12. Vorrichtung nach einem der Ansprüche 1 bis 11, **dadurch gekennzeichnet, dass** der rohrförmige Abschnitt (44) des Gehäuses (42) an dessen hinterem Ende aufgeweitet ist.

13. Vorrichtung nach einem der Ansprüche 1 bis 12, **dadurch gekennzeichnet, dass** das Gehäuse (42) an seinem hinteren Ende (48) ein quer zur Achse des rohrförmigen Abschnitts (44) des Gehäuses (42) gerichtetes Einsatzteil (62) aufweist, das eine das hintere Ende (48) des Gehäuses (42) bildende Außenseite und eine dem rohrförmigen Abschnitt (44) des Gehäuses (42) zugewandte Innenseite aufweist, die eine Aufnahmevertiefung (69) für das mindestens eine Abschottelement (80) aufweist, und dass die Außenseite des Einsatzteils (62) zwei Einlassstutzen (54,56) aufweist, von denen sich aus durch das Einsatzteil (62) die Kanäle (64,66) erstrecken, die in die die Einlassöffnungen (68,70) bildenden Öffnungen der Aufnahmevertiefung (69) münden.

14. Vorrichtung nach einem der Ansprüche 1 bis 13, **dadurch gekennzeichnet, dass** jeweils eine gleiche Anzahl von Mischerelementen (74,75) innerhalb mehrerer Radialebenen von der Achse (72) abstehen und bis nahe an die Innenfläche (76) des rohrförmigen Abschnitts (44) des Gehäuses (42) reichen.

15. Vorrichtung nach Anspruch 14, **dadurch gekennzeichnet, dass** die Mischerelemente (74) der in axialer Richtung zu den Einlassöffnungen (68,70) des rohrförmigen Abschnitts (44) des Gehäuses (42) benachbarten ersten Radialebenen kürzer sind als die Mischerelemente (75) in den übrigen zweiten Radialebenen.

16. Vorrichtung nach Anspruch 14 oder 15, **dadurch gekennzeichnet, dass** innerhalb der oder zwischen den ersten und/oder zweiten Radialebenen von Mischerelementen (74,75) von der Achse (72) der Mischerwelle (38) abstehende Abstreiferelemente (77) angeordnet sind, die sich tangential von der Achse (72) der Mischerwelle (38) erstrecken.

17. Vorrichtung nach einem der Ansprüche 1 bis 16, **dadurch gekennzeichnet, dass** innerhalb von einer der Anzahl von Mischerelementen (74) pro Radialebene gleichenden Anzahl von zweiten Radialebenen jeweils zwei in Umfangsrichtung benachbarte Mischerelemente (74) untereinander über einen in Umfangsrichtung verlaufenden Teilabschnitt (78,78') verbunden sind und dass diese Paare von miteinander verbundenen Mischerelementen (74) von zweiter Radialebene zu zweiter Radialebene in Umfangsrichtung versetzt angeordnet sind.

18. Vorrichtung nach einem der Ansprüche 1 bis 17, **dadurch gekennzeichnet, dass** die Achse (72) der Mischerwelle (38) in dem sich an die Einlassöffnungen (68,70) des rohrförmigen Abschnitts (44) des Gehäuses (42) in axialer Richtung anschließenden Bereich einen kleineren Durchmesser als in ihrem übrigen Bereich aufweist.

## Claims

1. A device for mixing two pasty substances, particularly for mixing a dental impression substance with a catalyst substance, comprising
- a housing (42) comprising a substantially tubular portion (44) and at least two inlet openings (68,70) for the two pasty substances at its rear end, and an outlet opening (52) for the mixed pasty substances at its front end,
- said housing (42) being provided with a coupling portion (46) joining said tubular portion (44) and having two coupling openings (55,57) formed therein for connecting the housing (42) with two outlet openings (28,30) of a device (12) for dispensing the two pasty substances, and
- said coupling openings (55,57) being connected to said inlet openings (68,70) via first and second channels (64,66) extending through said coupling portion (46), and
- at least one mixer element (74,75) arranged within said tubular portion (44) of the housing (42) for mixing the two pasty substances when the substances are passing through the tubular portion (44) of the housing (42), wherein
- said first channel or said second channel (64,66) or both of said channels (64,66) extend to at least two inlet openings (68,70),
- all of said inlet openings (68,70) are spatially separated from each other, and
- said first channel (64) or said first channels (64) are separated from said second channel (66) or said second channels (66),
**characterized in**
**that** baffle elements (80) are arranged between all of said inlet openings (68,70) within the housing (42) for interrupting the direct connection between adjacent inlet openings (68,70).

2. The device according to claim 1, **characterized in that** said baffle elements (80) and said at least one mixing element (74,75) is fixedly arranged in the housing (42).

3. The device according to claim 1, **characterized in that** said at least one mixing element (74,75) projects radially from a mixer shaft (38) extending through said tubular portion (44) of the housing (42) and supported for rotation therein, and that said baffle elements (80) at the level of said inlet openings (68,70) extend radially from said mixer shaft (38) and are arranged to sweep at least partially across the inlet openings (68,70) upon rotation of the mixer shaft (38).

4. The device according to claim 3, **characterized in that** each baffle element (80) comprises a deflection face (82) extending around said mixer shaft (38) and oriented obliquely relative to a radial plane of the mixer shaft (38), provided to deflect the pasty substances radially entering said tubular portion (44) of the housing (42), into the axial direction toward the outlet opening (52) of the housing (42).

5. The device according to claim 3, **characterized in that** each baffle element (80) is wedge-shaped.

6. The device according to any one of claims 3 to 5, **characterized in that** the circumferential extension of the baffle elements (80) is equal to the circumferential extension of the inlet openings (68,70).

7. The device according to any one of claims 1 to 6, **characterized in that** a channel (64,66) extending to more than one inlet opening (68,70) is divided into partial channels (65,65') which are equal in a number to said inlet openings (68,70), the ends of said partial channels having said inlet openings (68,70) arranged thereon.

8. The device according to any one of claims 1 to 7, **characterized in that** a channel (64,66) extending to more than one inlet opening (68,70) is along its extension connected to said tubular portion (44) of the housing (42) via these inlet openings (68,70).

9. The device according to any one of claims 1 to 8, **characterized in that** one channel (64) extends to one inlet opening (68) and the other channel (66) extends to two inlet openings (70), and that these three inlet openings (68,70) are arranged in uniform distribution in the circumferential direction of said tubular portion (44) of the housing (42).

10. The device according to any one of claims 1 to 9, **characterized in that** said inlet openings are oriented substantially radially and/or substantially axially to said tubular portion (44) of the housing (42).

11. The device according to any one of claims 1 to 10, **characterized in that** said at least one mixing element (74,75) is arranged immovably in said tubular portion (44) of the housing (42), or the mixing elements (74,75) are arranged to extend from a mixer shaft (38) supported to be rotated in the tubular portion (44) of the housing (42).

12. The device according to claim 1, **characterized in that** said tubular portion (44) of the housing (42) is flared at the rear end of the housing.

13. The device according to any one of claims 1 to 12, **characterized in that** the housing (42) on its rear end (48) is provided with an insert member (62) arranged transverse to the axis of said tubular portion (44) of said housing (42), said insert member (62) comprising an outer side forming the rear end (48) of the housing (42) and an inner side facing towards said tubular portion (44) of said housing (42), said inner side being formed with a receiving recess (69) for said at least one baffle element (80), and that said outer side of the insert member (62) is provided with two inlet connectors (54,56) having said channels (64,66) extending therefrom through the insert member (62), and that said openings of the receiving recess (69) forming said inlet openings (68,70) are arranged to enter said two channels (64,66).

14. The device according to any one of claims 1 to 13, **characterized in that**, within a plurality of radial planes, respectively identical numbers of mixing elements (74,75) extend from said axis (72) up to the close vicinity of the inner face (76) of said tubular portion (44) of said housing (42).

15. The device according to claim 14, **characterized in that** the mixing elements (74) of the first radial planes adjacent to each other in the radial direction to the inlet openings (68,70) of the tubular portion (44) of the housing (42) are shorter than the mixing elements (75) in the other, second radial planes.

16. The device according to claim 14 or 15, **characterized in that**, within or between the first and/or second radial planes of mixing elements (74,75), scraper elements (77) are arranged to project from the axis (72) of the mixer shaft (38), said scraper elements extending tangentially from the axis (72) of the mixer shaft (38).

17. The device according to any one of claims 1 to 16, **characterized in that**, within a plurality of second radial planes being equal in number to the mixing elements (74) per radial plane, respectively two circumferentially adjacent mixing elements (74) are connected to each other by a partial portion (78,78') extending in the circumferential direction, and that these pairs of mutually connected mixing elements (74) are displaced in the circumferential direction from each radial plane to the next radial plane.

18. The device according to any one of claims 1 to 17, **characterized in that** the axis (72) of the mixer shaft (38) in the region axially following the inlet openings (68,70) of the tubular portion (44) of the housing (42) is of a smaller diameter than in the other region of said axis (72).

## Revendications

1. Dispositif pour mélanger deux masses pâteuses, en particulier pour mélanger une masse pour empreinte dentaire avec une matière catalytique, comportant
- un boîtier (42) qui présente un tronçon (44) sensiblement tubulaire et au moins deux orifices d'admission (68, 70) pour les deux masses pâteuses à son extrémité postérieure et un orifice de sortie (52) pour les masses pâteuses mélangées à son extrémité antérieure,
- le boîtier (42) présentant un tronçon d'accouplement (46) se raccordant au tronçon tubulaire (44), avec deux orifices d'accouplement (55, 57) pour relier le boîtier (42) à deux orifices de distribution (28, 30) d'un dispositif (12) pour la distribution des deux masses pâteuses, et
- les orifices d'accouplement (55, 57) étant reliés aux orifices d'admission (68, 70) via un premier canal (54) et un deuxième canal (66) qui s'étendent à travers le tronçon d'accouplement (46), et
- au moins un élément mélangeur (74, 75) agencé à l'intérieur du tronçon tubulaire (44) du boîtier (42) pour mélanger les deux masses pâteuses lorsque celles-ci passent à travers le tronçon tubulaire (44) du boîtier (42),
- le premier canal (64) ou le deuxième canal (66) ou les deux canaux (64, 66) s'étendant jusqu'à au moins deux orifices d'admission (68, 70) respectifs,
- tous les orifices d'admission (68, 70) étant séparés les uns des autres dans l'espace, et
- le premier canal (64) ou les premiers canaux (64) étant séparés du deuxième canal (66) ou des deuxièmes canaux (66),
**caractérisé en ce que**
- des éléments de cloisonnement (80) sont agencés entre tous les orifices d'admission (68, 70) à l'intérieur du boîtier (42) pour interrompre la liaison libre entre des orifices d'admission (68, 70) voisins.

2. Dispositif selon la revendication 1, **caractérisé en ce que** les éléments de cloisonnement (80) et ledit au moins un élément mélangeur (74, 75) sont agencés de façon immobile dans le boîtier (42).

3. Dispositif selon la revendication 1, **caractérisé en ce que** ledit au moins un élément mélangeur (74, 75) fait saillie radialement depuis un arbre mélangeur (38) qui s'étend à travers le tronçon tubulaire (44) du boîtier (42) et est monté rotatif dans celui-ci, et **en ce que** les éléments de cloisonnement (80) font saillie radialement depuis l'arbre mélangeur (38) à la hauteur des orifices d'admission (68, 70) et balayent au moins partiellement les orifices d'admission (68, 70) lors de la rotation de l'arbre mélangeur (38).

4. Dispositif selon la revendication 3, **caractérisé en ce que** chaque élément de cloisonnement (80) présente une surface de déviation (82) s'étendant autour de l'arbre mélangeur (38) et en oblique par rapport à un plan radial de l'arbre mélangeur (38) pour dévier en direction axiale vers l'orifice de sortie (52) du boîtier (42) les masses pâteuses introduites radialement dans le tronçon tubulaire (44) du boîtier (42).

5. Dispositif selon la revendication 4, **caractérisé en ce que** chaque élément de cloisonnement (80) est réalisé à la manière d'un coin.

6. Dispositif selon l'une des revendications 3 à 5, **caractérisé en ce que** l'extension périphérique des éléments de cloisonnement (80) est égale à l'extension périphérique des orifices d'admission (68, 70).

7. Dispositif selon l'une des revendications 1 à 6, **caractérisé en ce qu'**un canal (64, 66), qui s'étend jusqu'à plus d'un orifice d'admission (68, 70), se divise en un nombre de canaux partiels (65, 65') égal au nombre de ces orifices d'admission (68, 70), canaux aux extrémités desquels se trouvent les orifices d'admission (68, 70).

8. Dispositif selon l'une des revendications 1 à 7, **caractérisé en ce qu'**un canal (64, 66), qui s'étend jusqu'à plus d'un orifice d'admission (68, 70), est relié au tronçon tubulaire (44) du boîtier (42) le long de son extension et via ces orifices d'admission (68, 70).

9. Dispositif selon l'une des revendications 1 à 8, **caractérisé en ce que** ledit un canal (64) s'étend jusqu'à un orifice d'admission (68) et l'autre canal (66) s'étend jusqu'à deux orifices d'admission (70), et **en ce que** ces trois orifices d'admission (68, 70) sont agencés de manière régulière en direction périphérique du tronçon tubulaire (44) du boîtier (42).

10. Dispositif selon l'une des revendications 1 à 9, **caractérisé en ce que** les orifices d'admission sont orientés sensiblement radialement et/ou sensiblement axialement au tronçon tubulaire (44) du boîtier (42).

11. Dispositif selon l'une des revendications 1 à 10, **caractérisé en ce que** ledit au moins un élément mélangeur (74, 75) est agencé immobile dans le tronçon tubulaire (44) du boîtier (42), et **en ce que** les éléments mélangeurs (74, 75) font saillie depuis un arbre mélangeur (38) qui est monté rotatif dans le tronçon tubulaire (44) du boîtier (42) dans le but d'un entraînement en rotation.

12. Dispositif selon l'une des revendications 1 à 11, **caractérisé en ce que** le tronçon tubulaire (44) du boîtier (42) est élargi à son extrémité postérieure.

13. Dispositif selon l'une des revendications 1 à 12, **caractérisé en ce que** le boîtier (42) présente à son extrémité postérieure (48) une pièce d'insert (62) orientée transversalement à l'axe du tronçon tubulaire (44) du boîtier (42), laquelle présente une face extérieure formant l'extrémité postérieure (48) du boîtier (42) et une face intérieure tournée vers le tronçon tubulaire (44) du boîtier (42) et qui présente un renfoncement de réception (69) pour ledit au moins un élément de cloisonnement (80), et **en ce que** la face extérieure de la pièce d'insert (62) présente deux manchons d'admission (54, 56) depuis lesquels les canaux (64, 66) s'étendent à travers la pièce d'insert (62) et débouchent dans les orifices du renfoncement de réception (69) qui forment les orifices d'admission (68, 70).

14. Dispositif selon l'une des revendications 1 à 13, **caractérisé en ce qu'**un même nombre respectif d'éléments mélangeurs (74, 75) font saillie depuis l'axe (72) à l'intérieur de plusieurs plans radiaux et parviennent jusqu'à proximité de la surface intérieure (76) du tronçon tubulaire (44) du boîtier (42).

15. Dispositif selon la revendication 14, **caractérisé en ce que** les éléments mélangeurs (74) des premiers plans radiaux, voisins, en direction axiale, des orifices d'admission (68, 70) du tronçon tubulaire (44) du boîtier (42) sont plus courts que les éléments mélangeurs (75) dans les autres deuxièmes plans radiaux.

16. Dispositif selon l'une ou l'autre des revendications 14 et 15, **caractérisé en ce qu'**à l'intérieur des plans radiaux ou entre les premiers et/ou les deuxièmes plans radiaux d'éléments mélangeurs (74) sont agencés des éléments de raclage (77) faisant saillie depuis l'axe (72) de l'arbre mélangeur (38), qui s'étendent tangentiellement depuis l'axe (72) de l'arbre mélangeur (38).

17. Dispositif selon l'une des revendications 1 à 16, **caractérisé en ce qu'**à l'intérieur d'un nombre de deuxièmes plans radiaux égal au nombre des éléments mélangeurs (74) par plan radial, deux éléments mélangeurs (74) voisins en direction périphérique sont chacun reliés l'un à l'autre via un tronçon partiel (78, 78') s'étendant en direction périphérique, et **en ce que** ces paires d'éléments mélangeurs (74) reliés les uns aux autres sont agencées en décalage en direction périphérique d'un deuxième plan radial à un autre deuxième plan radial.

18. Dispositif selon l'une des revendications 1 à 17, **caractérisé en ce que** l'axe (72) de l'arbre mélangeur (38) présente, dans la région se raccordant en direction axiale aux orifices d'admission (68, 70) du tronçon tubulaire (44) du boîtier (42), un diamètre plus petit que dans sa région subsistante.
